# EUROPÄISCHE PATENTSCHRIFT

(11) **EP 0 433 632 B1**
(45) Veröffentlichungstag und Bekanntmachung des Hinweises auf die Patenterteilung: **11.08.1993**
(21) Anmeldenummer: 90121244.9
(22) Anmeldetag: 07.11.1990
(51) Int. Cl.: F02D 43/00, F02D 37/02, F02D 33/00, F02D 41/04

(54) **Verfahren zum Steuern eines Ottomotors ohne Drosselklappe**
Method to control an internal combustion engine without throttle
Méthode de commande de moteur à combustion interne sans papillon d'admission

(30) Priorität: 09.12.1989 DE 3940752
(43) Veröffentlichungstag der Anmeldung: 26.06.1991
(73) Patentinhaber: ROBERT BOSCH GMBH, 70442 Stuttgart (DE)
(72) Erfinder: Tillhon, Engelbert, Dipl.-Ing., W-7128 Lauffen (DE); Stutzenberger, Heinz, Dr.-Ing., W-7143 Vaihingen/Enz (DE); Klinke, Christian, Dipl.-Ing., W-7140 Ludwigsburg-Hoheneck (DE)

(56) Entgegenhaltungen:
- EP-A- 0 376 714
- GB-A- 2 134 596
- US-A- 3 682 152
- US-A- 4 009 695
- US-A- 4 805 571
- PATENT ABSTRACTS OF JAPAN vol. 8, no. 203 (M-326)(1640) 18 September 1984, & JP-A-59 93939 (TOYOTA JIDOSHA K.K.) 30 Mai 1984
- PATENT ABSTRACTS OF JAPAN vol. 10, no. 92 (M-468)(2149) 09 April 1986, & JP-A-60 230529 (MAZDA K.K.) 16 November 1985

## Beschreibung

Die Erfindung betrifft ein Verfahren zum Steuern eines Motors ohne Drosselklappe mit Hilfe variabler Einlaßventil-Öffnungsdauern. Der Motor verfügt pro Zylinder über mehrere Einlaßkanäle, mindestens einen Drallkanal und einen Füllungskanal. Außer individuell ansteuerbaren Einlaßventilen können auch individuell ansteuerbare Auslaßventile vorhanden sein.

Im folgenden wird wiederholt von Zeitpunkten "Einlaß öffnen" und "Einlaß schließen" gesprochen. Bei diesen Zeitpunkten handelt es sich genauer gesagt um jeweilige Kurbelwinkeldifferenzen bezogen auf den oberen Totpunkt eines Kolbens zu Beginn eines Ansaugtaktes bzw. bezogen auf den unteren Totpunkt beim Ende eines Ansaugtaktes. Die Aussage, daß ein Zeitpunkt z. B. "Einlaß öffnen" konstant ist, besagt demgemäß, daß für alle Zylinder die genannte Kurbelwinkeldifferenz dieselbe ist.

### Stand der Technik

Ein Verfahren zum Steuern eines Viertakt-Ottomotors ohne Drosselklappe ist von J. H. Tuttle unter dem Titel "Controlling Engine Load by Means of Early Intake Valve Closing" in SAE-Papers 820408 (1982), S. 1 - 15 beschrieben. Um trotz fehlender Drosselklappe unterschiedliche Ansaugvolumina realisieren zu können, wurden die Zeitpunkte "Einlaß schließen" bei jeweils konstantem Zeitpunkt "Einlaß öffnen" variiert.

Die US-PS 4 009 695 betrifft ein "programmed valve system for internal combution engins". Nach diesem Dokument wird der Zietpunkt des Öffnens und Schließens der Einlaßventile abhängig von Gaspedalstellung und Drehzahl gesteuert, ebenso ist die Kraftstoffmenge von diesen Parametern abhängig (vergl. Anspruch 1, 1.Teil).

Der Erfindung liegt die Aufgabe zugrunde, ein Verfahren zum Steuern eines Ottomotors ohne Drosselklappe mit Hilfe variabler Einlaßventil-Öffnungsdauern anzugeben, das es erlaubt, einen Motor so zu betreiben, daß er bei Betrieb in einem Kraftfahrzeug zu gutem Fahrkomfort bei möglichst niedrigem Verbrauch und geringem Schadstoffausstoß führt.

Das erfindungsgemäße Verfahren mit den Merkmalen aus dem Anspruch 1 gewährleistet, daß Luftmasse und Kraftstoffmenge immer optimal aneinander angepaßt sind, um minimalen Schadgasausstoß zu erreichen. Das Verfahren gewährleistet auch, daß selbst bei plötzlichen Fahrpedaländerungen das Luft/Kraftstoff-Gemisch nicht so weit ausmagert oder anfettet, daß es zu Zündaussetzern kommt oder die Umwandlungswirkungsgrade der katalytischen Abgasnachbehandlung stark abnehmen. Guter Fahrkomfort selbst bei Instationärvorgängen ist damit erzielt.

Bei einem Motor mit mehreren Zylindern muß die Einlaßventilanordnung an jedem Zylinder mit variablen Öffnungsdauern betreibbar sein. Dies ermöglicht die Realisierung einer Weiterbildung der Erfindung, gemäß der für unterschiedliche Zylinder unterschiedliche Einlaßventil-Öffnugnsdauern so bestimmt werden, daß alle aktiven Zylinder im wesentlichen dieselbe Menge an Luft/Kraftstoff-Gemisch ansaugen. Dadurch ergibt sich eine sehr gleichmäßige Drehmomentverteilung und geringstmöglicher Schadgasausstoß für alle Zylinder.

Zum Festlegen von Einlaßventil-Öffnungsdauern können sowohl die Zeitpunkte "Einlaß öffnen" wie auch "Einlaß schließen" variiert werden. Ein Ändern über einen großen Kurbelwinkelbereich ist vor allem für "Einlaß schließen" möglich. Es ist daher von Vorteil, im wesentlichen die Zeitpunkte "Einlaß schließen" zu beeinflussen, um eine jeweils gewünschte Luftmasse anzusaugen. Ein Variieren der Zeitpunkte "Einlaß öffnen" wird vorzugsweise eingesetzt, um ein Einlaßventil so anzusteuern, daß es bereits öffnet, wenn der zugehörige Zylinderkolben noch Abgas aus dem zugehörigen Zylinder herausschiebt, um dadurch eine Abgasrückführung zu erzielen.

Die Tatsache, daß beim erfindungsgemäßen Verfahren Luft und Kraftstoff gemeinsam durch die jeweiligen Werte von Motordrehzahlsignal und Fahrpedalsignal bestimmt werden, ermöglicht es, zahlreiche Steuervorgänge in vorteilhafter Weise durch Modifizieren des Fahrpedalsignals auszuführen, wobei das Modifizieren so erfolgt, daß sich der Wert der zu steuernden Motorbetriebsgröße in Richtung auf den jeweils gewünschten Wert zu bewegt. Dies kann z. B. zur Leerlaufregelung, zur Klopfregelung, zur Antriebsschlupfregelung, zur Motorschleppmomentregelung, zur Fahrgeschwindigkeitsregelung, zur Drehzahl- oder Geschwindigkeitsbegrenzung oder zum Erzielen von weichen Übergängen beim automatischen Schalten genutzt werden.

### Zeichnung

Die Erfindung wird im folgenden anhand von durch Figuren veranschaulichten Ausführungsbeipielen erläutert. Es zeigen:
- Fig. 1: Blockdarstellung einer Steuerungseinrichtung zum Veranschaulichen eines Verfahrens zum Steuern von Ansaugluftmasse und Kraftstoffmenge für einen Viertakt-Ottomotor ohne Drosselklappe;
- Fig. 2: weiter detaillierte Blockdarstellung zu Fig. 1;
- Fig. 3: Blockdarstellung einer variablen Ventilsteuerung mit Lambdawert-Regelungseinrichtung; und
- Fig. 4: Blockdarstellung einer Einlaßventilsteuerung, die in eine Drallkanal-Einlaßventilsteuerung und eine Füllungskanal-Einlaßventilsteuerung untergliedert ist, zum Veranschaulichen eines Verfahrens, bei dem Drallkanal- und Füllungskanal-Einlaßventile unterschiedlich angesteuert werden.

### Beschreibung von Ausführungsbeispielen

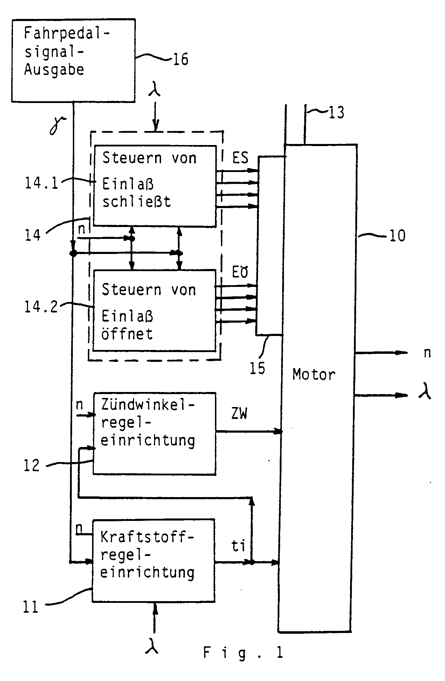

Beim Betrieb des in Fig. 1 als Funktionsblock dargestellten Ottomotors 10 werden die diesem zugeführte Luft, der zugeführte Kraftstoff und die Zündzeitpunkte abhängig von Betriebsbedingungen eingestellt.

Deutlich unterschiedlich zur Ausführung derzeit üblicher Ottomotoren ist die Einrichtung zum Zuführen der Luft zum Motor. In der Saugrohranordnung 13 ist nämlich keine Drosseleinrichtung vorhanden. Stattdessen wird die Luft mit Hilfe einer Einlaßventil-Steuereinrichtung 14 gesteuert, die beim dargestellten Ausführungsbeispiel in eine ES(Einlaßschließ)-Steuereinrichtung 14.1 und eine EÖ(Einlaß Öffnen)-Steuereinrichtung 14.2 untergliedert ist. Erstere gibt vier Signale ES an eine Einlaßventil-Betätigungseinrichtung 15, während letztere vier Signale EÖ an die genannte Einrichtung 15 ausgibt. Es sei an dieser Stelle angemerkt, daß hier und im folgenden ein Vierzylinder-Ottomotor vorausgesetzt wird. Diese Anzahl von Zylindern ist jedoch nur zum Veranschaulichen gewählt.

Die zeitliche Lage der Signale EÖ und ES wird abhängig von Werten eines Fahrpedalsignals γ und eines Drehzahlsignals n bestimmt. Ersteres wird von einer Fahrpedalsignalausgabe 16 ausgegeben. Letzteres wird durch einen in Fig. 1 nicht dargestellten Motordrehzahlmesser geliefert.

Bei herkömmlichen Ottomotoren wird zur Lasterfassung häufig das Signal eines Luftmassenmessers oder eines Saugrohrdruckmessers verwendet. Die zuvor genannten Meßeinrichtungen sind mit dynamischen Fehlern behaftet, die teils sensorbedingt sind (Klappen-Luftmengenmesser), teils meßprinzipbedingt sind (Aktualisierung der Lastsignal-Auswertung - "Aktualisierungsfehler") oder die sich durch die Anordnung des Sensors im Saugsystem (vor dem Luftverteiler ergeben - "Phasenfehler"). Um diese Fehler zu vermeiden, wird in der vorliegenden Erfindung auf eine solche Meßeinrichtung verzichtet. Die Tatsache, daß der Saugrohrdruck im Mittel konstant ist, kommt diesem Steuerungsprinzip zugute. Da bei einem Ottomotor 10 ohne Drosseleinrichtung zum Steuern des Luftmassenflusses der Saugrohrdruck im wesentlichen dauernd dem äußeren Luftdruck entspricht, sind sehr genaue Voraussagen der angesaugten Luftmasse in Abhängigkeit von der Einlaßdauer möglich, wie sie durch eine Einlaßventilanordnung an jedem Zylinder eingestellt wird.

Auch der Kraftstoff-Regeleinrichtung 11 werden das Fahrpedalsignal γ und das Drehzahlsignal n zugeführt. Mit Hilfe dieser Signale wird also sowohl die Luftmasse pro Hub wie auch die Kraftstoffmasse pro Hub gesteuert. Sind beide Steuerungen nicht vollkommen aneinander angepaßt, erfolgt ein Ausgleich mit Hilfe einer Lambdaregelung. Diese wirkt entweder nur auf die Kraftstoff-Regeleinrichtung 11 oder sowohl auf diese wie auch auf die Einlaßventil-Steuereinrichtung 14. Dies ist in Fig. 1 durch ein Lambdasignal λ angedeutet, das den beiden genannten Einrichtungen zugeführt wird. Das Regeln des Lambdawertes mit Hilfe der Einlaßventil-Steuereinrichtung hat den Vorteil, daß ein sehr schnelles Ansprechen auf Änderungen des Lambdawerts erfolgt. Jedoch ist ein Regeln über die Luft nur möglich, solange die Maximalfüllung noch nicht erreicht ist. Muß bei maximaler Füllung der Lambdawert erhöht werden, muß also mehr Luft im Verhältnis zur zugeführten Kraftstoffmasse bereitgestellt werden, kann dies nicht mehr über ein regelndes Erhöhen der Luftmasse erfolgen, sondern nur noch über ein regelndes Erniedrigen der Kraftstoffmasse pro Hub.

Aus der vorstehend erläuterten Funktion der Lambdaregelung über den Luftmassenstrom geht hervor, daß diese Art der Regelung davon unabhängig ist, ob der Luftmassenfluß insgesamt mit Hilfe einer üblichen Drosseleinrichtung, unterstützt durch eine herkömmliche variable Ventilsteuerung, oder allein durch eine variable Ventilsteuerung erfolgt.

Auch die Zündwinkel-Regeleinrichtung 12 könnte als Lastwert das Fahrpedalsignal oder ein aus diesem Fahrpedalsignal abgeleitetes Signal erhalten. Vorteilhafter ist es jedoch, das Ausgangssignal der Kraftstoff-Regeleinrichtung 11 als Lastsignal zu verwenden, da dieses Signal üblicherweise in vielfältiger Art korrigiert ist. Außerdem ist die Einspritzmenge das entscheidende Maß für die Drehmomentabgabe des Motors und damit auch für den erforderlichen Zündwinkel. Die Zündwinkel-Regeleinrichtung 12 erhält also das Einspritzsignal ti als Lastisgnal und sie gibt ein Zündwinkelsignal ZW an den Ottomotor 10 aus.

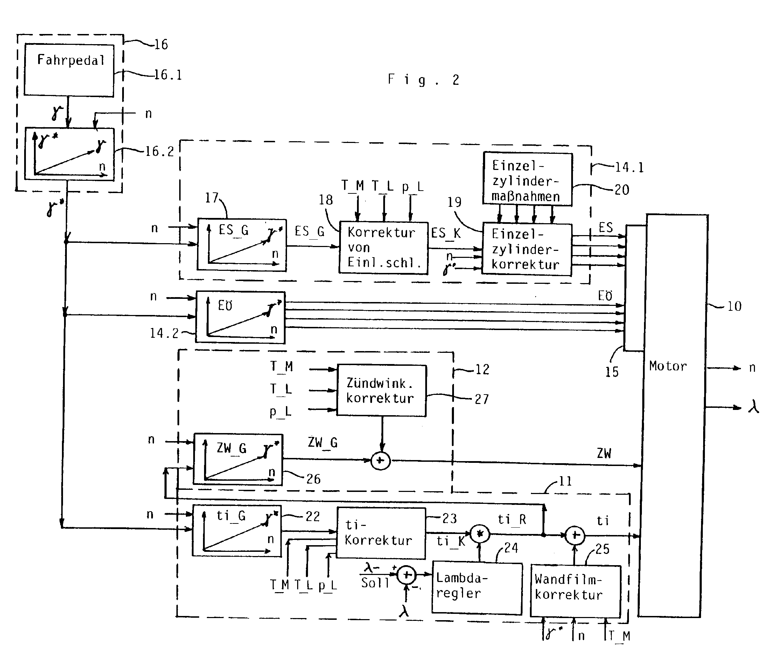

Fig. 2 betrifft ein bevorzugtes Ausführungsbeispiel. Die Fahrpedalsignal-Ausgabeeinrichtung 16 besteht aus einem Fahrpedal 16.1 und einem Fahrpedalsignal-Kennfeldspeicher 16.2. Letzerer gibt abhängig von der Größe des unmittelbaren Fahrpedalsignals γ und abhängig von der Drehzahl n des Ottomotors 10 ein Fahrpedalsignal γ* aus. Mit Hilfe des Kennfeldes im Fahrpedalsignal-Kennfeldspeicher 16.2 kann das Lastannahme-Verhalten des Motors in Abhängigkeit von der Fahrpedalstellung und der Drehzahl vorgegeben werden.

Die ES-Steuereinrichtung 14.1 weist vier Blöcke auf, nämlich einen ES(Einlaß Schließt)-Grundkennfeldspeicher 17, ein Gesamtkorrekturglied 18, ein Einzelkorrekturglied 19 und eine Einzelmaßnahmeneinrichtung 20. Aus dem ES-Grundkennfeldspeicher 17 wird abhängig von der jeweiligen Drehzahl n und dem jeweiligen Fahrpedalsignal γ* eine Grundgröße ES_G für den Schließwinkel für das Einlaßventil ausgegeben. Diese Grundgröße wird im Gesamtkorrekturglied 18 in eine korrigierte Größe ES_K umgewandelt. Beim Ausführungsbeispiel wurde eine multiplikative Verknüpfung mit einer von der Motortemperatur T_M abhängigen Funktion, einer von der Lufttemperatur T_L abhängigen Funktion und einer vom Luftdruck p_L abhängigen Funktion vorgenommen. Je höher z. B. die Lufttemperatur bei jeweils gleichem Luftdruck ist, um so später muß ein Einlaßventil schließen, damit es beim selben Öffnungszeitpunkt und bei ansonsten gleichen Betriebsbedingungen gleich viel Luftmasse pro Hub durchläßt. Das Einzelkorrekturglied 19 nimmt eine zylinderabhängige Einzelkorrektur abhängig vom Fahrpedalsignal γ* und der Drehzahl n vor. Dieses Einzelkorrekturglied 19 gleicht konstruktionsbedingte Unterschiede in der Führung der Luft aus. Dadurch wird sichergestellt, daß jeder Zylinder bei jeder Drehzahl und jeder Last im wesentlichen gleich viel Luftmasse pro Hub ansaugt. Der Zweck der Einzelmaßnahmeneinrichtung 20 wird weiter unten näher erläutert.

Die EÖ-Steuereinrichtung 14.2 ist beim Ausführungsbeispiel gemäß Fig. 2 als Kennfeld ausgebildet, das abhängig von Drehzahl n und Fahrpedalsignal γ* einen Wert für den Kurbelwinkel ausgibt, zu dem die Einlaßventile vor ihrem jeweiligen oberen Totpunkt öffnen sollen. Für jede Paarung von Drehzahl und Last (Fahrpedalsignal) ist der Winkel für alle vier Einlaßventile gleich.

Die Einzelmaßnahmeneinrichtung 20 in der ES-Steuereinrichtung 14.1 dient insbesondere zum Abschalten einzelner Zylinder im unteren Lastbereich. Sie sorgt dafür, daß ausgewählte Einlaßventile sofort nach dem Öffnen wieder geschlossen werden, oder daß sie gar nicht öffnen, z. B. dadurch, daß das Schließsignal ES gleichzeitig mit dem Öffnungssignal EÖ ausgegeben wird. Zum genannten Zweck könnte die Einzelmaßnahmeneinrichtung 20 auch auf das Signal EÖ für die verschiedenen Einlaßventile einwirken, und zwar dahin, daß im unteren Lastbereich Öffnungssignale an mindestens ein Einlaßventil nicht ausgegeben werden, damit dieses dauernd geschlossen bleibt und dadurch Luftwechselverluste verhindert werden. Gleichzeitig wird die Kraftstoffzufuhr zu dem vom Gaswechsel abgeschnittenen Zylinder unterbunden. Die Signale von der Einzelmaßnahmeneinrichtung 20 wirken für den genannten Zweck somit auch auf die Kraftstoff-Regeleinrichtung 11, was in Fig. 2 jedoch der Übersichtlichkeit halber nicht dargestellt ist.

Die Kraftstoff-Regeleinrichtung 11 verfügt bei der Ausführungsform gemäß Fig. 2 über einen Einspritzzeit-Kennfeldspeicher 22, ein Korrekturglied 23, einen Lambdaregler 24 und ein Wandfilmkorrekturglied 25. In bezug auf die Verknüpfung dieser Funktionsteile wird auf Fig. 2 verwiesen. Es handelt sich um eine Regeleinrichtung, wie sie in millionenfacher Stückzahl in unterschiedlichsten Ausführungsformen am Markt üblich ist, abgesehen vom Wandfilmkorrekturglied 25. Mit Hilfe dieses Wandfilmkorrekturgliedes wird am sonst üblicherweise verwendeten Einspritzzeitsignal, wie es von einer Kraftstoff-Regelungseinrichtung ausgegeben wird, eine Korrektur ausgeführt, die das dynamische Verhalten des Kraftstoff-Wandfilms im Saugrohr berücksichtigt. Jedes beliebige Wandfilm-Korrekturmodell kann verwendet werden. Wandfilmkorrekturen werden in Regelungsprozessen für Instationärvorgänge grundsätzlich verwendet. Die Wandfilmkorrektur mit Hilfe des Korrekturgliedes 25 unterstützt somit die guten Fahr- und Schadstoffeigenschaften der Anordnung gemäß Fig. 2, wie sie bereits durch das schnelle Ansprechverhalten des Luftmassenstroms mit Hilfe der variablen Ventilsteuerung erzielbar sind.

Auch die Zündwinkel-Regeleinrichtung 12 weist zwei bekannte Funktionsglieder auf, nämlich einen Zündwinkel-Kennfeldspeicher 26 und ein Zündwinkel-Korrekturglied 27. Aus dem Zündwinkel-Kennfeldspeicher 26 wird abhängig von der Drehzahl n und der geregelten Einspritzzeit ti_R eine Grundgröße ZW_G für den Zündwinkel ausgegeben, die mit Hilfe des Zündwinkel-Korrekturgliedes 27 additiv mit Funktionen korrigiert wird, die die Abhängigkeit des Zündwinkels von der Motortemperatur T_M, der Lufttemperatur T_L und dem Luftdruck p_L berücksichtigen.

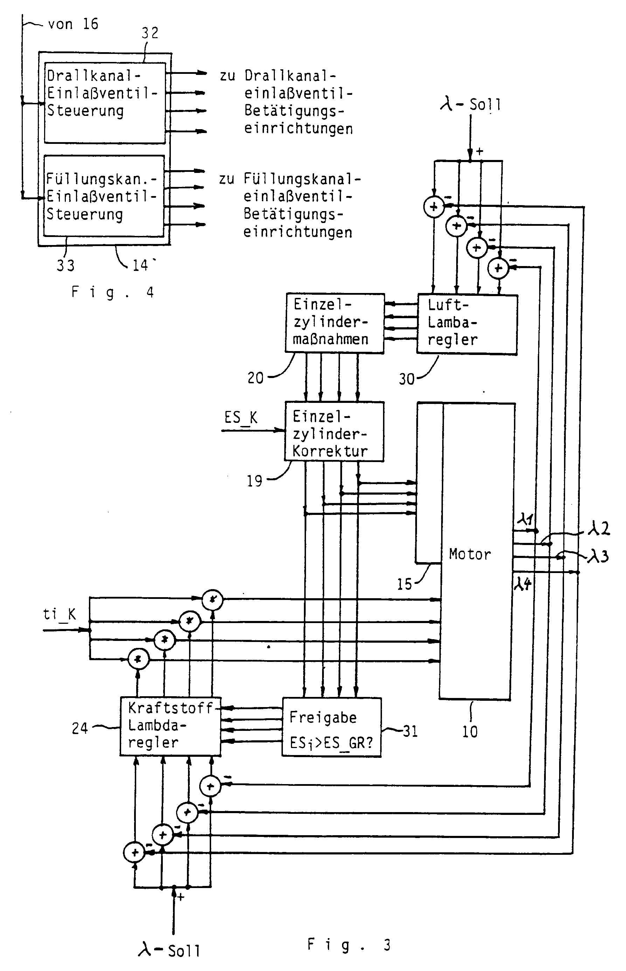

Fig. 3 betrifft einen Ottomotor 10 mit Funktionsgliedern, die für eine Lambdaregelung über den Luftmassenfluß und den Kraftstofffluß sorgen. Bei der Ausführungsform gemäß Fig. 3 ist in allen vier Abgaskrümmern 28.1 - 28.4 des Vierzylinder-Ottomotors 10 eine Lambdasonde 29.1 - 29.4 angeordnet, wodurch es möglich ist, den Lambdawert für alle vier Zylinder einzeln zu regeln. Die von den vier Sonden gemessenen Lambdawerte gelangen als Istwerte zur Vergleichseinrichtung des Krafstoff-Lambdareglers 24 und auch zur Vergleichseinrichtung eines Luft-Lambdareglers 30. In den jeweiligen Vergleichseinrichtungen werden die vier Lambda-Istwerte mit einem Lambda-Sollwert verglichen. Abhängig von der Größe der jeweiligen Regelabweichungen geben die beiden Regler 24 und 30 Stellsignale aus. Die Stellsignale vom Kraftstoff-Lambdaregler 24 werden in üblicher Weise verarbeitet. Die Stellsignale vom Luft-Lambdaregler 30 gehen an die Einzelmaßnahmeneinrichtung 20 und werden von dort an das Einzelkorrekturglied 19 weitergegeben, wie oben anhand von Fig. 3 beschrieben.

Wichtig für die Funktion der Anordnung gemäß Fig. 3 ist eine Freigabeeinrichtung 31 , die den Kraftstoff-Lambdaregler 24 nur dann in seiner Eingriffsmöglichkeit auf die Einspritzzeit auf einen individuellen Zylinder freigibt, wenn für diesen Zylinder die Maximalfüllung erreicht ist. Ob Maximalfüllung vorliegt, wird bei der Ausführungsform gemäß Fig. 3 dadurch überprüft, daß für jeden Zylinder einzeln untersucht wird, ob der Schließwinkel ES_i für das jeweils zugehörige Einlaßventil einen Grenzwert ES_GR überschreitet. Sobald diese Bedingung erfüllt ist, wird der Kraftstoff-Lambdaregler 24 in seiner Wirkung für den zugehörigen Zylinder freigegeben. Der Luft-Lambdaregler steht für den zugehörigen Zylinder am Anschlag.

Einzelzylinder-Kraftstoffregeleinrichtungen sind aus der Literatur in unterschiedlichen Ausführungsformen bekannt. Derartige Regeleinrichtungen können wie Gesamtregeleinrichtungen mit Adaptionseinrichtungen versehen sein, und zwar einer Adaptionseinrichtung für die Einspritzzeiten für jeden einzelnen Zylinder. Entsprechend können für die Luftregelung unterschiedlichst ausgestaltete Luft-Lambdaregler 30 verwendet werden, sei es mit oder ohne Adaptionseinrichtung.

Die in der Praxis derzeit verwendeten Kraftstoff-Lambdaregler nehmen keine zylinderindividuelle Regelung vor, sondern regeln mit einem einzigen Lambda-Istwert die Einspritzzeiten für alle Zylinder gemeinsam. Entsprechend können mit einem solchen einzigen Lambda-Istwert die Einlaßdauern für alle Einlaßventile gemeinsam geregelt werden.

Anhand von Fig. 3 wurde ein Verfahren veranschaulicht, wie über eine Lambdaregelung die Öffnungsdauern von Einlaßventilen beeinflußt werden können. Entsprechend können auch andere herkömmliche Regelungen eingreifen, wie Leerlaufregelungen oder Klopfregelungen. Soll nicht zylinderindividuell geregelt werden, ist ein Beeinflussen des unmittelbaren Fahrpedalsignals γ oder auch des Fahrpedalsignals γ* von besonderem Vorteil. Das Fahrpedalsignal kann regelnd auch durch eine Antriebsschlupfregelung, eine Motorschleppmomentregelung, eine Fahrgeschwindigkeitsregelung oder eine Drehzahl- oder Geschwindigkeitsbegrenzung beeinflußt werden. Bei Schaltvorgängen wird durch vom Fahrer nicht beeinflußbares Zurücknehmen des Fahrpedalsignals γ* ein weicher Übergang erzielt. Dadurch kann das für den Motorwirkungsgrad ungünstige herkömmliche Zurücknehmen des Zündwinkels unterbleiben.

Abgasrückführung läßt sich durch betriebspunktabhängiges Variieren der Öffnungszeitpunkte der Einlaßventile erzielen. Bei vorgezogenem Öffnen gelangt noch während einer Kolbenaufwärtsbewegung Abgas in die Ansaugleitung, das zu Beginn des folgenden Ansaugtaktes wieder angesaugt wird. Abhängig vom gewählten Öffnungszeitpunkt wird die Abgasrückführrate gesteuert.

Die Einlaßventilsteuerung 14 gemäß Fig. 1 kann funktionsmäßig nicht nur nach dem Gesichtspunkt "Einlaß schließt" und "Einlaß öffnet" unterteilt sein,
sondern auch danach, wieviele Einlaßventile pro Zylinder ansteuerbar sind. Eine Möglichkeit besteht darin, daß im Ansteuern unterschiedlicher Einlaßventile für einen Zylinder kein Unterschied gemacht wird. Eine andere Möglichkeit ist durch Fig. 4 veranschaulicht. Hier ist funktionsmäßig eine Einlaßventilsteuerung 14' in eine Drallkanal-Einlaßventilsteuerung 32 und eine Füllungskanal-Einlaßventilsteuerung 33 untergliedert. Luft, die durch einen Drallkanal strömt, wird stark verwirbelt, was zu guter Gemischaufbereitung führt. Luft durch einen Füllungskanal strömt dagegen mit möglichst geringem Widerstand und damit relativ kleiner Verwirbelung ein. Es ist von Vorteil, die vorstehend beschriebenen Verfahren in Anwendung auf einen mit solchen Kanälen ausgebildeten Ottomotor derart zu variieren, daß in einem unteren Lastbereich, in dem Luftzufuhr durch die Drallkanäle ausreicht, die Füllungskanal-Einlaßventile dauernd geschlossen bleiben. Die Dauern der Ansteuersignale für die Drallkanal-Einlaßventile werden so bestimmt, daß alleine festgelegt durch diese Öffnungsdauern pro Ansaugtakt im wesentlichen diejenige Luftmasse angesaugt wird, die durch den jeweiligen Wert des Fahrpedalsignals vorgegeben ist. Übersteigt die aufgrund der Fahrpedalstellung anzusaugende Luftmasse die vorstehend angegebene Grenze, werden die Drallkanal-Einlaßventile so angesteuert, daß sie die maximal mögliche Luftmenge einströmen lassen. Die Dauern der Ansteuersignale für die Füllungskanal-Einlaßventile werden dagegen so bestimmt, daß pro Ansaugtakt im wesentlichen diejenige Luftmasse angesaugt wird, die durch den jeweiligen Wert des Fahrpedalsignals vorgegeben ist. Wird die angegebene Grenze nicht überschritten, sondern wesentlich unterschritten, ist es von Vorteil, einzelne Zylinder ganz abzuschalten und in den restlichen nur noch die Drallkanal-Einlaßventile mit Wahl der Öffnungsdauern in der genannten Art zu betreiben.

Beim bevorzugten Ausführungsbeispiel sind am Motor noch (nicht dargestellte) Klopfsensoren vorhanden, um das Klopfverhalten eines jeden Zylinders selektiv zu erfassen. Wird festgestellt, daß ein Zylinder klopft, wird die Einlaßzeit so verändert, daß sich das Klopfen legt. Dies hat den Vorteil, daß die verbrauchserhöhende, bisher übliche Zündwinkelverstellung zum Beseitigen von Klopfen entfallen kann.

Es wird daruaf hingewiesen, daß die Blockschaltbilder gemäß den Fig. 1 - 4 nur zum Veranschaulichen der vorstehend beschriebenen Verfahren zum Ansteuern eines Ottomotors ohne Drosselklappe dienen. Die beschriebenen Verfahrensabläufe werden in der Praxis durch Mikroprozessoren realisiert, also nicht durch Schaltungsblöcke, die den Funktionsblöcken gemäß den Figuren konkret zugeordnet wären.

## Patentansprüche

1. Verfahren zum Steuern eines Ottomotors ohne Drosselklappe mit Hilfe variabler Einlaßventil-Öffnungsdauern, bei dem
- ein Drehzahlsignal (n) erfaßt wird, dessen Wert von der Drehzahl abhängt,
- ein Fahrpedalsignal (γ) erfaßt wird, dessen Wert von der Fahrpedalstellung abhängt,
- und sowohl die Einlaßventil-Öffnungsdauern (ES - EÖ) wie auch die Kraftstoffmengen (∼ ti) abhängig von den jeweiligen Werten von Motordrehzahlsignal und Fahrpedalsignal bestimmt werden,
dadurch gekennzeichnet, daß
der Motor einen Drall- und einen Füllungskanal für jeden Zylinder aufweist, wobei
- im unteren Lastbereich des Motors die Füllungskanal-Öffnungsventile dauernd geschlossen gehalten werden und die Öffnungsdauern für die Drallkanal-Öffnungsventile so bestimmt werden, daß alleine festgelegt durch diese Öffnungsdauern pro Ansaugtakt im wesentlichen diejenige Luftmasse angesaugt wird, die durch die jeweiligen Werte von Fahrpedalsignal und Drehzahlsignal vorgegeben ist,
- und im darüberliegenden Lastbereich die Drallkanal-Öffnungsventile so angesteuert werden, daß sie die maximal mögliche Luftmenge einströmen lassen, und die Öffnungsdauer für die Füllungskanal-Öffnungsventile durch die jeweiligen Werte von Fahrpedalsignal und Drehzahlsignal vorgegeben ist.

2. Verfahren nach Anspruch 1, dadurch gekennzeichnet, daß für unterschiedliche Zylinder unterschiedliche Einlaßventil-Öffnungsdauern (ES - EÖ) so bestimmt werden, daß alle aktiven Zylinder im wesentlichen dieselbe Menge an Luft/Kraftstoff-Gemisch ansaugen.

3. Verfahren nach einem der Ansprüche 1 oder 2, dadurch gekennzeichnet, daß für mindestens einen Zylinder bei Vorliegen eines Teillastsignales die zugehörige Einlaßventilanordnung nicht mehr geöffnet wird.

4. Verfahren nach einem der Ansprüche 1 bis 3, dadurch gekennzeichnet, daß der Öffnungsbeginn für ein jeweiliges Einlaßventil so früh gelegt wird, daß es bereits öffnet, wenn der zugehörige Zylinderkolben noch Abgas aus dem zugehörigen Zylinder herausschiebt, um dadurch eine Abgasrückführung zu erzielen.

5. Verfahren nach einem der Ansprüche 1 bis 4, dadurch gekennzeichnet, daß zum Regeln von Motorbetriebsgrößen das Fahrpedalssignal (γ) so modifiziert wird, daß sich der Wert der jeweils geregelten Motorbetriebsgröße in Richtung auf den jeweils gewünschten Wert zubewegt (FGR, MSR, ASR usw.).

6. Verfahren nach einem der Ansprüche 1 bis 5, dadurch gekennzeichnet, daß das Klopfverhalten des Motors zylinderselektiv überwacht wird und die Einlaßventil-Öffnungsdauern für jeden Zylinder so bestimmt werden, daß möglichst in keinem Zylinder Klopfen auftritt.

## Claims

1. Method of controlling an Otto engine without a throttle valve with the aid of variable inlet-valve opening durations, in which
- a rotary-speed signal (n) whose value depends on the rotary speed is measured,
- an accelerator pedal signal (γ) whose value depends on the accelerator pedal setting is measured,
- and both the inlet-valve opening durations (ES -EÖ) and the volumes of fuel (∼ti) are determined as a function of the current values of engine rotary-speed signal and accelerator pedal signal,
characterised in that
the engine has a swirl channel and a filling channel for each cylinder,
- the filling-channel opening valves being kept permanently closed in the lower load range of the engine and the opening durations for the swirl-channel opening valves being determined in such a way that, governed solely by said opening durations, essentially that amount of air is taken in per intake stroke which is set by the current values of accelerator pedal signal and rotary-speed signal,
- the swirl-channel opening valves are activated in the load range situated above in such a way that they allow the maximum possible volume of air to flow in and the opening duration for the filling-channel opening valves is set by the current values of the accelerator pedal signal and rotary-speed signal.

2. Method according to Claim 1, characterised in that different inlet-valve opening durations (ES - EÖ) are determined for different cylinders in such a way that all the active cylinders essentially take in the same amount of air/fuel mixture.

3. Method according to either of Claims 1 or 2, characterised in that the associated inlet-valve system is no longer opened for at least one cylinder if a partial-load signal is present.

4. Method according to one of Claims 1 to 3, characterised in that the start of opening for a respective inlet valve is set so early that it is already opening when the associated cylinder piston is still expelling exhaust gas from the associated cylinder in order to thereby achieve an exhaust-gas feedback.

5. Method according to one of Claims 1 to 4, characterised in that, to regulate engine operating variables the accelerator pedal signal (γ) is modified in such a way that the value of the engine operating variable regulated in each case moves in the direction of the value desired in each case (driving speed regulation, drag torque regulation, drive slip regulation, etc.).

6. Method according to one of Claims 1 to 5, characterised in that the knocking behaviour of the engine is monitored in a cylinder-selective manner and the inlet-valve opening durations are determined for each cylinder in such a way that, if possible, knocking does not occur in any cylinder.

## Revendications

1. Procédé de commande d'un moteur à essence sans papillon d'admission à l'aide de durées variables de la soupape d'admission, selon lequel :
- on détecte un signal de vitesse de rotation (n) dont la valeur dépend de la vitesse de rotation,
- on détecte un signal de pédale d'accélérateur (γ) dont la valeur dépend de la position de la pédale d'accélérateur,
- on détermine à la fois les durées d'ouvertures des soupapes d'admission (ES-EÖ) ainsi que les quantités de carburant (~ ti) suivant les valeurs respectives du signal de vitesse de rotation du moteur et du signal de la pédale d'accélérateur,
procédé caractérisé en ce que :
- le moteur comporte un canal de turbulence et un cana de remplissage pour chaque cylindre,
- dans la plage inférieure de charge du moteur les soupapes d'admission du canal de remplissage sont maintenues en permanence fermées et on définit les durées d'ouverture des soupapes d'admission du canal de turbulence pour que d'une manière uniquement définie par les durées d'ouverture par phase d'aspiration on aspire essentiellement la masse d'air prédéterminée par les valeurs respectives du signal de la pédale d'accélérateur et du signal de vitesse de rotation,
- et dans la plage de charge au-dessus, on commande les soupapes d'admission du canal de turbulence pour laisser entrer la quantité maximale d'air, possible, et on prédétermine la durée d'ouverture des soupapes d'admission du canal de remplissage par la valeur respective du signal de la pédale d'accélérateur et du signal de la vitesse de rotation.

2. Procédé selon la revendication 1, caractérisé en ce que pour des cylindres différents on détermine des durées d'ouverture de soupape d'admission différentes (ES-EÖ) pour que tous les cylindres actifs aspirent essentiellement la même quantité du mélange air/carburant.

3. Procédé selon l'une des revendications 1 ou 2, caractérisé en ce que pour au moins un cylindre, en présence d'un signal de charge partielle on n'ouvre plus le dispositif de soupape d'admission correspondant.

4. Procédé selon l'une des revendications 1 à 3, caractérisé en ce qu'on avance le début de l'ouverture pour chaque soupape d'admission respective de façon qu'elle s'ouvre déjà lorsque le piston du cylindre correspondant expulse encore des gaz d'échappement du cylindre, pour arriver ainsi à une réinjection de gaz d'échappement.

5. Procédé selon l'une des revendications 1 à 4, caractérisé en ce que pour réguler les grandeurs de fonctionnement du moteur on modifie le signal de la pédale d'accélérateur (γ) pour que la valeur des grandeurs de fonctionnement chaque fois régulée du moteur se déplace en direction de la valeur respectivement souhaitée (FGR, MSR, ASR, etc...).

6. Procédé selon l'une des revendications 1 à 5, caractérisé en ce qu'on surveille sélectivement pour chaque cylindre le comportement au cognement du moteur et on définit les durées d'ouverture de la soupape d'admission de chaque cylindre pour qu'il n'y ait autant que possible aucun cognement dans les cylindres.
